# EUROPÄISCHE PATENTSCHRIFT

(11) **EP 0 727 298 B1**
(45) Veröffentlichungstag und Bekanntmachung des Hinweises auf die Patenterteilung: **25.08.1999**
(21) Anmeldenummer: 95120759.6
(22) Anmeldetag: 23.12.1995
(51) Int. Cl.: B29C 47/02, B05C 5/02

(54) **Verfahren zum Auftragen eines Randstreifens aus viskosem Material mit einem Eckbereich**
Method of applying a viscous material to the edging strip and to the corner regions
Méthode pour enduire de matière visqueuse les bandes de bordure et les parties en coin

(30) Priorität: 16.02.1995 DE 19505162
(43) Veröffentlichungstag der Anmeldung: 21.08.1996
(73) Patentinhaber: DaimlerChrysler AG, 70567 Stuttgart (DE)
(72) Erfinder: Kusen, Michael, D-28355 Bremen (DE)

(56) Entgegenhaltungen:
- EP-A- 0 444 998
- EP-A- 0 568 014
- EP-A- 0 672 513
- US-A- 5 382 395

## Beschreibung

Die Erfindung bezieht sich auf ein Verfahren zum Auftragen eines Randstreifens aus einem viskosem Material auf eine Fläche, die wenigstens einen Eckbereich aufweist, nach dem Oberbegriff des Anspruchs 1.

Ein derartiges Verfahren dient beispielsweise zum Aufbringen einer Kleberraupe mit vorzugsweise dreieckförmigem Querschnitt auf eine Fahrzeugscheibe entlang deren Randes. Nach Aufbringen der Kleberraupe, die z.B. aus einem Polyurethan-Klebermaterial besteht, kann die Scheibe dann mechanisiert oder von Hand in eine zugehörige Karrosserieöffnung eingeklebt werden. Bei einem herkömmlichen Verfahren dieser Art wird die Kleberraupe dadurch unterbrechungssfrei über den Eckbereich der mit dem Randstreifen zu versehenden Fläche hinweg aufgetragen, daß die Düse entlang eines Kreisbogens mit kleinem Radius über diesen Eckbereich hinweggeführt wird, wie beispielsweise in der Offenlegungsschrift DE 37 30 344 A1 beschrieben. Dabei wurde festgestellt, daß in bestimmten Anwendungsfällen nicht mehr die gewünschte Form und/oder Gleichmäßigkeit der Kleberraupe gewährleistet werden kann, wenn der Krümmungsradius der Düsenbahn zu gering wird. Mit dieser Technik läßt sich daher keine Kleberraupe mit homogener Querschnittsform und scharfen Ecken erzielen.

Letzteres trifft analog für ein in der Offenlegungsschrift DE 43 26 179 A1 offenbartes Verfahren zum Auftragen einer Spacerraupe mit definiertem Querschnitt auf eine Fahrzeugscheibe zu. Um unter Beibehaltung des gewünschten Querschnitts die Spacerraupe mit zu einem jeweiligen Eckbereich der Scheibe konformem, eckigem Verlauf aufzubringen, wird daher dort vorgeschlagen, die an den jeweiligen Eckbereich angrenzenden Spacerraupenabschnitte sich im Eckbereich überlappend aufzutragen, wonach mittels eines eigens hierfür vorgesehenen Preßformwerkzeugs der verdickte Überdeckungsbereich in die gewünschte Eckform gebracht wird.

Aus der Offenlegungsschrift DE 40 34 291 A1 ist ein Verfahren zum Auftragen eines Mediums auf einen Flachkörper mittels eines Roboters offenbart, bei dem eine Bewegung des Flachkörpers durch den Roboter und eine Drehbewegung der Düse so aufeinander abgestimmt werden, daß sich ein möglichst einfacher Bewegungsablauf für den Roboter ergibt. Beispielsweise wird dort zum Aufbringen einer randseitigen Kleberraupe mit dreieckförmigem Querschnitt auf eine Fahrzeugscheibe die Scheibe mittels des Roboters beim Auftragen der Kleberraupe entlang einer Scheibenseite einer kombinierten Translations- und Rotationsbewegung unterworfen, während gleichzeitig die Düse so gedreht wird, daß der Düsenschlitz quer zur Längsrichtung des aufzubringenden Kleberraupenstreifens positioniert bleibt.

Bei einem in der Offenlegungsschrift JP 1-184076 (A) beschriebenen Verfahren wird ein Randstreifen aus viskosem Material in einem Flächeneckbereich diskontinuierlich mittels eines Roboterarms aufgebracht, indem bei Erreichen der Ecke das Ausbringen des Materials gestoppt wird, der Roboterarm in einer Schleife seine Bewegungsrichtung parallel zur Richtung des als nächstes aufzubringenden Randstreifenabschnitts ändert und bei erneutem Erreichen der Ecke das Ausbringen des Materials fortgesetzt wird.

Bei einem aus der Offenlegungsschrift JP 59-199079 (A) bekannten Verfahren wird eine randseitige Kleberraupe an der Unterseite eines Flächenkörpers mittels einer den Flächenkörper umfangseitig umfahrenden, an der Unterseite des Flächenkörpers ausmündenden Düse aufgebracht.

Der Erfindung liegt als technisches Problem die Bereitstellung eines Verfahrens der eingangs genannten Art zugrunde, mit dem mit vergleichsweise geringem Aufwand ein unterbrechungsfreier Randstreifen erzielt werden kann, dessen Verlauf mit demjenigen des Flächenrandes auch in einem Eckbereich desselben konform ist.

Dieses Problem wird durch ein Verfahren mit den Merkmalen des Anspruchs 1 gelöst. Zum Auftragen des Randstreifens über einen Eckbereich hinweg wird die Düse bei ununterbrochen fortgesetztem Materialaustrag bei Annäherung an die Ecke stetig so gedreht, daß der Düsenaustrittsschlitz, der normalerweise quer zur Längsrichtung des aufzubringenden Randstreifens liegt, stetig derart verkippt wird, daß er einen kleiner werdenden spitzen Winkel mit der Winkelhalbierenden des Eckbereichs einschließt. Vorzugsweise liegt der Düsenschlitz bei Erreichen der Ecke parallel zu dieser Winkelhalbierenden. Aus der in der Ecke erreichten Stellung wird die Düse während des anschließenden Entfernens aus der Ecke stetig weitergedreht, vorzugsweise so lange, bis der Düsenschlitz wieder quer zur neuen Längsrichtung des momentan aufgetragenen Randstreifenabschnitts liegt. Mit diesem Verfahren verringert sich zwar die Breite des aufgebrachten Randstreifens zu einer Ecke hin, dies ist jedoch in den meisten Fällen unkritisch. Durch die Einsparung von Verfahrensschritten und speziellem Werkzeug für die Randstreifengestaltung in Eckbereichen ist das Verfahren bei hoher Randstreifenqualität verglichen mit den eingangs erwähnten herkömmlichen Verfahren sehr kostengünstig durchführbar. Ein wichtiger Anwendungsfall ist das Auftragen einer Kleberraupe mit dreieckförmigem Querschnitt entlang des Randes einer Fahrzeugscheibe. Das Verfahren erlaubt den Kleberraupenauftrag in einem Arbeitsgang gegebenenfalls gleichzeitig mit einer Dichtprofilumspritzung, wobei sich in den Scheibeneckbereichen bei Aufrechterhaltung des dreieckförmigen Kleberraupenquerschnitts ein mit dem Scheibenrand konformer, scharfkantiger Kleberraupenverlauf erzielen läßt.

Die DE 39 37 381 A1 zeigt eine Einrichtung zum kontrollierten Auftragen von linear verlaufenden Stängen pastöser Massen auf ein Substrat, wobei zugleich mit dem Raupenauftrag eine optische Glanzgradmessung an einer der Auftragsstelle vorauslaufenden Stelle und an einer nachlaufenden Stelle durchgeführt wird. Aus einer bestimmten Differenz des Glanzgrades der beiden Meßstellen wird auf eine ausreichende Stärke des des Raupenauftrages geschlossen. Offensichtlich geht es dort vorwiegend um ein kontrolliertes Auftragen von - glänzender - Lötpaste auf - matte - Leiterplatten. Zum einen läßt sich die bekannte Auftragskontrolle nur auf solche Paarungen von Substrat und Auftragsmedium einsetzen, die sich in ihrem Glanz deutlich voneinander unterscheiden. Für etwa gleich stark glänzende Substrate bzw. Auftragsmedien oder für definiert geformte Raupen mit stark streuender Reflexwirkung wie in der Automobilindustrie üblich, wäre die bekannte Kontrolle nicht einsetzbar. Darüber hinaus läßt sich dieser Literatur keinerlei Anregung dahingehend entnehmen, wie eine Kleberaupe formtreu entlang einer scharfkanig abknickenden Spur rationell aufgetragen werden kann. Aus einem **Prüfen** des Vorhandenseins oder Fehlens eines Raupenauftrages läßt sich logischer Weise nichts bezüglich des **Produzierens** eines bestimmten Raupenquerschnittes unter erschwerten geometrischen Auftragsbedingungen herleiten.

Da es nur auf eine Relativbewegung zwischen Düse und der mit dem Randstreifen zu versehenden Fläche ankommt, spielt es hinsichtlich des Bewegungsablaufs keine Rolle, ob nur die Düse, nur die Fläche oder beide Teile in Bewegung versetzt werden. Eine Weiterbildung der Erfindung nach Anspruch 2 ist insbesondere für solche Anwendungen vorteilhaft, bei denen. die Düse ein deutlich geringeres Gewicht als Körper besitzt, auf den der Randstreifen aufgebracht wird, da dann die beispielsweise robotergeführte Düse der Bewegungsbahn über einen scharfkantigen Eckbereich hinweg wesentlich ruhiger zu folgen vermag als der schwerere Körper.

Eine bevorzugte Kinematik der Relativbewegung zwischen Düse und Fläche über einen Eckbereich hinweg wird in Weiterbildung der Erfindung nach Anspruch 3 dadurch erreicht, daß die Düse um einen Punkt gedreht wird, der auf Höhe der äußeren Seite des aufzutragenden Randstreifens liegt. Bei einem Eckbereich mit geradlinigen Flächenkanten läßt sich dann der Randstreifen über den Eckbereich hinweg durch diese Düsendrehbewegung kombiniert mit einer Translationsbewegung entlang der Flächenkanten auftragen, wobei die Richtung der Transversalbewegung von der mit der einen Flächenkante parallelen Richtung auf die mit der anderen Flächenkante parallele Richtung umgestellt wird, sobald die Düse die Ecke erreicht hat.

Eine bevorzugte Ausführungsform der Erfindung ist in den Zeichnungen dargestellt und wird nachfolgend beschrieben. Hierbei zeigen:
- Fig. 1: einen Ausschnitt einer Fahrzeugscheibe in einem Eckbereich mit randseitig aufgebrachter Kleberraupe und Dichtprofilumspritzung,
- Fig. 2: eine schematische Draufsicht auf die zur Erzeugung der Kleberraupe von Fig. 1 verwendete Düsenbewegungsbahn und
- Fig. 3: eine Gesamtansicht der Scheibe von Fig. 1 in Draufsicht mit randseitigen Schnittdarstellungen und einer zugehörigen, ausschnittweisen Schnittzeichnung der in eine Karosserieblechöffnung eingefügten Scheibe.

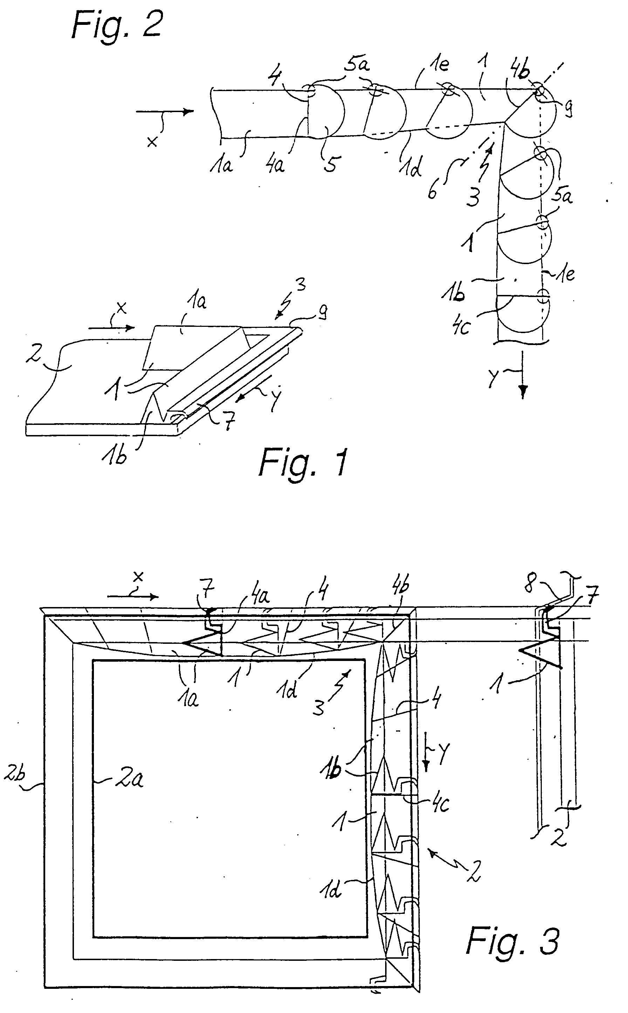

Die perspektivische Teilansicht von Fig. 1 zeigt eine Fahrzeugscheibe, auf die ein Randstreifen in Form einer Kleberraupe (1) aus Polyurethan-Klebermaterial mit dreieckförmigem Querschnitt aufgetragen ist. Gleichzeitig ist die Scheibe (2) mit einem außerhalb der Kleberraupe (1) umlaufenden Gummidichtprofil (7) versehen, das über den Scheibenrand hinausragt. Die Umrandung aus dem Gummidichtprofil (7) sowie die Kleberraupe (1) werden in einem Arbeitsgang in Düsenauftragstechnik aufgebracht, wobei das Auftragen der Kleberraupe (1) nachfolgend näher beschrieben wird. Wie aus Fig. 1, in welcher ein Eckbereich (3) der Scheibe (2) dargestellt ist, zu ersehen, verläuft die Kleberraupe (1) konform mit dem eckigen Scheibenrandverlauf in einer gleichfalls scharf abgewinkelten Gestalt mit zwei zueinander senkrechten Randstreifenabschnitten (1a, 1b) die sich auf je einer Seite des Eckbereichs (3) erstrecken. Diese Form der Kleberraupe (1) läßt sich durch eine spezielle Relativbewegung des zum Ausbringen des Kleberraupenmaterials verwendeten Düsenkörpers (5) mit schlitzförmigem Düsenaustritt (4) zur Scheibe (2) erzielen, wie sie in Fig. 2 genauer illustriert ist.

Die in Figur 2 wiedergegebene Relativbewegung der schematisch dargestellten Düse (4, 5) gegenüber der nicht dargestellten Scheibe zeigt, daß sich der Düsenkörper (5) mit dem Düsenaustrittsschlitz (4) zum Auftragen der Kleberraupe (1) in dem gezeigten Eckbereich (3) zunächst in Längsrichtung (x) des zuerst aufgetragenen Kleberraupenabschnitts (1a) bewegt, bis die Ecke (9) erreicht ist. Dort wird der transversale Düsenvorschub umgesteuert, indem die bisherige Transversalbewegung in x-Richtung gestoppt und der Düsenkörper (5) nunmehr in die Längsrichtung (y) des anschließend aufzutragenden Kleberraupenabschnitts (1b) beschleunigt wird. Dieser transversalen Knickbewegung des Düsenkörpers (5) ist eine Drehbewegung desselben überlagert, deren Drehpunkt (5a) am äußeren Ende des Düsenschlitzes (4) liegt. Vor der Annäherung an den Eckbereich (3) ist die Düse (5) wie üblich mit quer zur Längsrichtung (x) der aufzutragenden Kleberraupe (1) verlaufendem Düsenschlitz positioniert, wie mit dem Bezugszeichen (4a) markiert. Bei Erreichen eines gewissen, vorwählbaren Abstandes zur Ecke (9) setzt dann die Drehbewegung um den Drehpunkt (5a) ein, wobei die Drehachse senkrecht zur Zeichenebene, d.h. senkrecht zur Längsersteckung des Düsenschlitzes (4) und senkrecht zur Längsrichtung (x) der Kleberraupe (1), liegt. Die Drehrichtung ist so gewählt, daß sich der Düsenschlitz (4) stetig in Richtung der Winkelhalbierenden (6) der Ecke (9) verkippt, wobei der Drehpunkt (5a) mit der Transversalbewegungskomponente des Düsenkörpers (5) mitgenommen wird. Die der Transversalbewegung des Düsenkörpers (5) beim Annähern an die Ecke (9) überlagerte, gleichmäßige Drehbewegung erfolgt derart, daß die Düsenschlitzlängsrichtung (4b) auf der Winkelhalbierenden des Eckbereichs (3) liegt, wenn der Düsenkörper (5) die Ecke (9) erreicht hat und die Transversalbewegungskomponente von der x- in die y-Richtung umgesteuert wird. Beim Verlassen der Ecke (9) wird die Drehbewegung des Düsenkörpers (5) stetig fortgeführt, bis die Düse (4, 5) in einem vorgegebenen Abstand zur Ecke (9) nach Verlassen derselben eine Stellung erreicht hat, in welcher die Düsenschlitzlängserstreckung (4c) wiederum quer zur nunmehr neuen Transversalbewegungsrichtung (y) liegt.

Ersichtlich vermeidet dieser Bewegungsablauf ein ruckartigens Drehen des Düsenkörpers (5) in der Ecke (9). Vielmehr wird die erforderliche 90°-Drehung gleichmäßig über den gesamten Eckbereich hinweg verteilt. Aus den in Fig. 2 dargestellten, aufeinander folgenden Düsenschlitzlagen folgt, daß bei ununterbrochenem Materialaustrag aus der Düse (4, 5) eine auch über den Eckbereich (3) hinweg unterbrechungsfreie Kleberraupe (1) aufgetragen wird, deren zueinander gewinkelten Raupenabschnitte (1a, 1b) in der Ecke (9) scharf gewinkelt aneinandergrenzen, ohne daß eine Rundung auftritt. Dabei läßt sich, wie aus Fig. 1 erkennbar, der dreieckförmige Kleberraupenquerschnitt auch über den Eckbereich (3) hinweg aufrechterhalten. Es tritt lediglich eine gewisse Verengung der Kleberraupe (1) in der Umgebung der Ecke (9) auf, da der Düsenaustrittsschlitz (4) dort nicht mehr senkrecht zur Kleberraupenlängsrichtung liegt. Denn durch die Düsenschlitzdrehung nähert sich mit abnehmenden Abstand zur Ecke (9) die Kleberraupeninnenseite (1d) bis auf eine Minimalbreite der Kleberraupe (1) der konform zum Scheibenrand verlaufenden Kleberraupenaußenseite (1e) an. Dies bereitet jedoch keine Schwierigkeiten, da zum einen die Kleberraupe (1) größtenteils hinter einen geschwärzten Scheibenbereich liegt, siehe unten, und zum anderen das gesamte Scheibensystem hinsichtlich Festigkeit ohne weiteres auf diese geringere Kleberraupenbreite in Eckbereichen hin ausgelegt werden kann.

In Fig. 3 ist die gesamte, etwa quadratische und im wesentlichen plane Scheibe (2) dargestellt, wobei an zwei Seiten die aufgebrachte Kleberraupe (1) mit ihren zugehörigen Abschnitten (1a, 1b) und das über den Scheibenaußenrand (2b) vorstehende Gummidichtprofil (7) in Schnitten veranschaulicht sind. Dabei ist der etwas gewölbte Verlauf der Kleberraupeninnenseite (1d) auf einer jeweiligen Scheibenseite durch das Verkippen des Düsenaustrittsschlitzes (4) aus seiner Querposition (4a, 4c) in die jeweils zur Winkelhalbierenden jedes Eckbereiches (3) parallele Lage (4b) zu erkennen. Ebenfalls zu erkennen ist der über den gesamten Scheibenrand aufrechterhaltene dreieckförmige Kleberraupenquerschnitt, der lediglich zu den Eckbereichen (3) hin in seiner Breite abnimmt. Die gesamte Kleberraupe (1) liegt innerhalb eines durch Keramik-Siebdruck geschwärzten Scheibenrahmens, der sich vom Scheibenaußenrand (2b) bis zu einem die Scheibendurchsichtfläche definierenden Scheibeninnenrand (2a) erstreckt.

Durch Rundumbewegung der Düse in den jeweiligen Transversalrichtungen (x, y, -x, -y) läßt sich die Kleberraupe durchgehend in einem Arbeitsschritt mit zur Scheibe (2) konformen, scharfwinkligen Ecken auftragen. Dies bedeutet gegenüber der herkömmlichen Technik zur Erzielung spitzer Kleberraupenecken, bei der ein zusätzliches Preßwerkzeug verwendet wird, eine beträchtliche Zeit-und Kostenersparnis. Das durchgängige Auftragen der Kleberraupe in den Eckbereichen vermeidet aufwendige Ansatz- und Verputzprobleme. Die Erzielung solch scharfwinkliger Kleberraupenecken ist mit einer kreisbogenförmig um die Ecke geführten Düse nicht zufriedenstellend möglich, da bei Bogenradien kleiner als ca. 30mm Verkantungen, Anrisse und/oder Schräglagen der Kleberraupe auftreten.

Die in Fig. 3 rechts gezeigte Schnittdarstellung zeigt einen Ausschnitt aus einem Schnitt auf Höhe der Mitte der oberen Scheibenseite parallel zur dortigen Düsenschlitzrichtung (4a) nach Einkleben der Scheibe in eine Öffnung einer Fahrzeugkarosseriewandung (8) unter Verwendung der Kleberraupe (1). Dabei drückt das Gummidichtprofil (7) abdichtend gegen den Karosserieöffnungsrand an.

Die zum Auftrag der Kleberraupe (1) erforderliche Relativbewegung zwischen Düse (5) mit Düsenschlitz (4) und Scheibe (2) kann in beliebiger, je nach Anwendungsfall geeigneter Weise realisiert werden. Häufig wird die Scheibe (2) beträchtlich schwerer sein als der Düsenkörper (5). In diesen Fällen ist es bevorzugt, die Scheibe (2) ortsfest zu halten und die Düse (5) mit einem Roboter oder einer Portalsteuerung in der in Fig. 2 erläuterten Weise zu bewegen.

Das obige Beispiel verdeutlicht die durch das erfindungsgemäße Verfahren gegebenen Vorteile, wobei weitere Verfahrensrealisierungen möglich sind. So kann der Bewegungsablauf dahingehend modifiziert sein, daß der Düsenschlitz nicht genau parallel zur Winkelhalbierenden liegt, wenn sich die Düse in der Ecke befindet. Außerdem kann eine andere Drehpunktlage gewählt werden, solange sichergestellt bleibt, daß sich der Düsenschlitz bei Annäherung der Düse an die Ecke in Richtung der Lage der Winkelhalbierenden dreht. Selbstverständlich ist durch entsprechende Modifikation des Bewegungsablaufs das Auftragen eines solchen Randstreifens nicht nur über den gezeigten rechtwinkligen Eckbereich, sondern über Eckbereiche mit beliebigen Eckwinkeln hinweg möglich. Es versteht sich, daß sich das Verfahren nicht nur zum Auftragen einer Kleberraupe für eine Fahrzeugscheibe, sondern zum Auftragen eines beliebigen Randstreifens aus viskosem Material auf eine Fläche eignet, z.B. im Flugzeugbau, im Fensterbau und in der Möbelindustrie.

## Patentansprüche

1. Verfahren zum Auftragen eines Randstreifens (1) aus einem viskosen Material auf eine Fläche (2) mit einem Eckbereich (3), insbesondere einer Kleberraupe auf eine Fahrzeugscheibe, bei dem
- das Material aus einer schlitzförmigen Düse unterbrechungsfrei auch über den Eckbereich hinweg ausgebracht wird, wobei die Düse in einer Relativbewegung über die Fläche geführt wird,
**dadurch gekennzeichnet, daß**
- die Düse (4, 5) während der Annäherung an die Ecke (9) stetig von einer Stellung mit im wesentlichen quer zur Längsrichtung (x) des momentan aufgetragenen Randstreifenabschnitts (1a) positioniertem Düsenschlitz (4) in Richtung einer Stellung mit parallel zur Winkelhalbierenden (6) des Eckbereiches (3) positioniertem Düsenschlitz und von dieser Eckstellung während dem anschließenden Entfernen aus der Ecke stetig in Richtung einer Stellung mit im wesentlichen quer zur Längsrichtung (y) des nunmehr aufgetragenen Randstreifenabschnitts (1b) positioniertem Düsenschlitz gedreht wird.

2. Verfahren nach Anspruch 1, weiter
**dadurch gekennzeichnet, daß**
die mit dem Randstreifen (1) zu versehende Fläche (2) ortsfest gehalten und die Düse (4, 5) relativ zu dieser bewegt wird.

3. Verfahren nach Anspruch 1 oder 2, weiter
**dadurch gekennzeichnet, daß**
der Drehpunkt (5a) der Düsendrehbewegung während des Überfahrens eines Eckbereiches (3) an der Außenseite (1e) des aufgetragenen Randstreifens (1) liegt.

## Claims

1. A process for applying an edge strip (1) made of a viscose material onto a surface (2) with a corner area (3), in particular an adhesive bead onto a vehicle window, in which
- the material is applied uninterruptedly over a corner area from a slit-shaped nozzle with the nozzle being moved over the surface in a relative movement,
**characterised in that,**
- as it nears the corner (9), the nozzle (4, 5) is rotated steadily from a position in which the nozzle slit (4) is positioned essentially at right angles to the longitudinal direction (x) of the section (1a) of the edge strip which has just been applied to a position in which the nozzle slit is positioned parallel to the line bisecting (6) the corner area (3) and, as the nozzle subsequently moves away from the corner, steadily towards a position in which the nozzle slit is positioned essentially at right angles to the longitudinal direction (y) of the section (1b) of the edge strip now being applied.

2. A process in accordance with Claim 1, further
**characterised in that**
the surface (2) to be provided with the edge strip (1) is held in place and the nozzle (4, 5) is moved in relation thereto.

3. A process in accordance with Claim 1 or 2, further
**characterised in that**
the point of rotation (5a) of the rotational movement of the nozzle as it moves over a corner area (3) lies on the outside (1e) of the edge strip (1) applied.

## Revendications

1. Procédé pour appliquer une bande de bordure (1) formée d'une matière visqueuse sur une surface (2) comportant une zone de coin (3), notamment un cordon de colle sur une vitre de véhicule, selon lequel
- la matière est délivrée sans interruption par une buse en forme de fente également sur la zone de coin, la buse étant guidée selon un déplacement relatif au-dessus de la surface,
caractérisé en ce que
- lorsqu'elle se rapproche du coin (9), la buse (4, 5) est entraînée en rotation depuis une position dans laquelle la fente (4) de la buse est positionnée sensiblement transversalement par rapport à la direction longitudinale (x) de la section instantanément déposée (1a) de la bande de bordure, en direction d'une position dans laquelle la fente de la buse est positionnée parallèlement à la bissectrice (6) de la zone de coin (3), et, pendant le retrait consécutif à partir du coin, est continûment entraînée en rotation à partir de cette position de coin en direction d'une position dans laquelle la fente de la buse est positionnée sensiblement transversalement par rapport à la direction longitudinale (y) de la section alors déposée (1b) de la bande de bordure.

2. Procédé selon la revendication 1, caractérisé en outre en ce que la surface (2) devant être pourvue de la bande de bordure (1) est retenue fixe et la buse (4, 5) est déplacée par rapport à cette surface.

3. Procédé selon la revendication 1 ou 2, caractérisé en outre en ce que le centre de rotation (5a) dudit mouvement de rotation de la buse pendant le franchissement d'une zone de coin (3) est situé sur le bord extérieur (1a) de la bande de bordure déposée (1).
